# EUROPÄISCHE PATENTSCHRIFT

(11) **EP 2 384 288 B1**
(45) Veröffentlichungstag und Bekanntmachung des Hinweises auf die Patenterteilung: **02.10.2013**
(21) Anmeldenummer: 09774665.5
(22) Anmeldetag: 09.12.2009
(51) Int. Cl.: B60P 1/28

(54) **FAHRZEUG-KIPPMULDENANORDNUNG UND DAZUGEHÖRIGES HERSTELLUNGSVERFAHREN**
DUMP BODY FOR VEHICLES AND CORRESPONDING MANUFACTURING METHOD
BENNE POUR LE TRANSPORT DE CHARGE ET METHODE DE FABRICATION

(30) Priorität: 31.12.2008 DE 102008063419
(43) Veröffentlichungstag der Anmeldung: 09.11.2011
(73) Patentinhaber: Schmitz Cargobull Gotha GmbH, 99867 Gotha (DE)
(72) Erfinder: VOLZ, Siegfried, 89610 Oberdischingen (DE)
(74) Vertreter: Baur & Weber Patentanwälte
(86) Internationale Anmeldenummer: PCT/EP2009/066711
(87) Internationale Veröffentlichungsnummer: WO 2010/076137

(56) Entgegenhaltungen:
- EP-A1- 1 642 766
- DE-A1- 10 201 593
- FR-A1- 2 928 633
- US-A- 5 681 095

## Beschreibung

Die Erfindung betrifft ein Verfahren zur Herstellung von Fahrzeug-Kippmuldenanordnungen.

Für Kippmuldenanordnungen auf Motorfahrzeugen ist es bekannt, deren Fertigung auf zwei voneinander entfernte Orte aufzuteilen, wobei an einem ersten Ort in einem ersten Fertigungsabschnitt Mulden-Halbschalen hergestellt werden, welche eine Seitenwand und eine halbe Bodenplatte umfassen. In einer oder zwei vollständig zusammengesetzten Fahrzeug-Kippmuldenanordnungen werden die Mulden-Halbschalen zugehörige Vorderwände, Heckteile und Hilfsrahmen weiterer Kippmuldenanordnungen zerlegt an einen entfernten Ort transportiert, wobei die Halbschalen mit seitlich überlappenden und höhenversetzten Bodenplattenhälften in einer fertigen Kippmuldenanordnung und die weiteren Bauteile in einer zweiten fertigen Kippmuldenanordnung transportiert werden. Mit zwei fertigen Kippmuldenanordnungen können auf diese Weise die Komponenten zu zwei weiteren, teilzerlegten Kippmuldenanordnungen transportiert werden. In einem zweiten Fertigungsabschnitt werden die Halbschalen entlang der Stoßlinie der beiden Bodenplattenhälften verschweißt und mit den übrigen Komponenten verbunden. Durch den Transport in zerlegter Form können die Transportkosten verringert werden. Ein derartiges Herstellungsverfahren ist z. B. in der Zeitschrift "Macchine Cantieri, Mai 2008" für ein Dump-Body-System der Firma Emilcamion beschrieben.

In der GB 967809 B ist ein aus einer Mehrzahl von in Langrichtung des Behälters aufeinander folgenden U-förmigen Profilen zusammengesetzter Fahrzeugbehälter bekannt, welcher in Längsrichtung durch Endwände abgeschlossen ist. Eine oder beide Endwände können mit Türen zur Entladung versehen sein. Durch einen nach außen geneigten Verlauf aller Wände können mehrere solcher Behälter ineinander gesetzt kostensparend transportiert und erst danach mit Rädern ausgestattet werden.

Die DE 201 21 273 U1, DE 102 01 593 A1 und EP 1 642 766 A1 zeigen jeweils modular aufgebaute Mulden, welche insbesondere in zwei Seitenwandmodule, ein Bodenmodul, ein Frontwandmodul und ein Heckklappenmodul aufgeteilt sind und in zerlegter Form volumengünstig transportiert oder beschichtet werden können. Die Verbindung der einzelnen Module erfolgt vorzugsweise ohne Schweißen über Kaltfügeelemente, wie z. B. Schraubbolzen.

Die US 5 681 095 zeigt eine Fahrzeug-Kippmülde, bei welcher Seitenpfosten eines eine Heckklappe umgebenden Deckrahmens mit durch eine Mehrzahl von Profilen gebildeten Seitenwänden durch Verschweißung oder über Bolzen verbunden ist.

Der vorliegenden Erfindung liegt die Aufgabe zugrunde, ein Verfahren zur Herstellung von Fahrzeug-Kippmuldenanordnungen mit weiteren Vorteilen insbesondere hinsichtlich Kosten und Handhabung gegenüber dem Stand der Technik anzugeben.

Die Erfindung ist in dem unabhängigen Anspruch beschrieben. Die abhängigen Ansprüche enthalten vorteilhafte Ausgestaltungen und Weiterbildungen der Erfindung.

Durch eine Vorfertigung von Teilmulden einer Fahrzeug-Kippmuldenanordnung, wobei die Teilmulden zumindest beide Seitenwände und den Boden, hingegen nicht das Heckteil enthalten, und die Seitenwände gegen die Vertikale geneigt sind und die Teilmulden nach oben aufweitend verlaufen, ergibt sich eine besonders kostengünstige Herstellung.

In einer ersten Ausführung, in welcher die Teilmulden im ersten Fertigungsabschnitt mit Seitenwänden und Boden, aber ohne Heckteil und ohne Vorderwand und vorteilhafterweise auch ohne oder mit nur wenigen Anbauteilen an Boden und Wänden vorgefertigt werden, kann vorteilhafterweise ein Stapeltransport mit einer großen vertikalen Überdeckung unmittelbar übereinander angeordneter Teilmulden von wenigstens 80 %, insbesondere wenigstens 90 % der Höhe der Teilmulden erreicht werden, wodurch eine große Zahl von z. B. zehn oder mehr Teilmulden auf einem Fahrzeug erreicht werden kann. Da die Teilmulden bereits aus dem ersten Fertigungsabschnitt Boden und beide Seitenwände enthalten, entfällt im zweiten Fertigungsabschnitt die bei dem bekannten Dump-Body-System erforderliche Verschweißung von Teilplatten des Bodens. Vorderwand und Heckteile sowie weitere Anbauteile können nach dem Transport in dem zweiten Fertigungsabschnitt vorteilhafterweise durch Kaltfügeverbindungen an die Teilmulden angefügt werden.

In anderer besonders vorteilhafter Ausführung werden in dem ersten Fertigungsabschnitt die Teilmulden mit Boden und Seitenwänden einschließlich der Vorderwand aber ohne Heckteil hergestellt. Vorzugsweise können dabei an den Außenseiten von Boden, Seitenwänden und/oder Vorderwand auch Anbauteile bereits im ersten Fertigungsabschnitt an den Teilmulden befestigt werden. Insbesondere kann auch vorgesehen sein, an den hinteren Kanten von Boden und Seitenwänden Halteelemente fest anzubringen, an welchen im zweiten Fertigungsabschnitt das Heckteil über vorzugsweise zerstörungsfrei lösbare Befestigungselemente befestigt werden kann. Die heckseitigen Halteelemente einer Teilmulde können insbesondere auch einen entlang der hinteren Kanten von Boden und Seitenwänden durchgehend verlaufenden U-förmigen Bügel bilden.

Die Stapelung der Teilmulden für den Transport erfolgt dabei vorteilhafterweise in der Art, dass die Teilmulden mit zusammenfallenden Mittellängsebenen, aber in Längsrichtung gegeneinander versetzt angeordnet sind, so dass das heckseitige Ende einer oberen von zwei unmittelbar übereinander angeordneten Teilmulden über das heckseitige Ende der unteren der beiden Teilmulden hinausragt.

Durch die Vorfertigung von Teilmulden einschließlich der Vorderwand im ersten Fertigungsabschnitt kann bei weiter erheblichen Transportkostenvorteilen der Fertigungsaufwand im zweiten Fertigungsabschnitt sehr gering gehalten werden. Insbesondere können Verfahrensschritte, welche aufwändige Fertigungseinrichtungen oder besonders hohe Sorgfalt und Fachkenntnis erfordern, in dem ersten Fertigungsabschnitt verlagert und damit die Investitionen für den zweiten Fertigungsabschnitt gering gehalten und Fertigungsfehler im zweiten Fertigungsabschnitt weitgehend vermieden werden.

Bei der Ausführung mit Verbindung der Vorderwand mit Boden und Seitenwänden bereits im ersten Fertigungsabschnitt macht sich die Erfindung zunutze, dass bei Fahrzeug-Kippmuldenanordnungen die Vorderwand und das die Rückwand bildende Heckteil vom Aufbau her stark verschieden sind und die Teilmulde mit Vorderwand aber ohne Heckteil besonders vorteilhaft in der Handhabung und bezüglich der Aufwandserspamis im zweiten Fertigungsabschnitt ist. Zusätzlich ergibt sich bei der nachträglichen Befestigung des Heckteils an der Teilmulde im zweiten Fertigungsabschnitt die vorteilhafte Möglichkeit, dass z. B. kundenspezifische oder länderspezifische Heckteile, welche dementsprechend nur in kleineren Stückzahlen benötigt werden, ganz oder teilweise aus anderen Fertigungsstätten, dabei gegebenenfalls auch mit kurzen Transportwegen zum Ort des zweiten Fertigungsabschnitts kommen können und ansonsten im wesentlichen gleich aufgebaute Teilmulden kostengünstig in großen Stückzahlen in dem ersten Fertigungsabschnitt vorgefertigt werden können.

Vorteilhafterweise kann ein System von Fahrzeug-Kippmuldenanordnungen vorgesehen sein, bei welchen unterschiedliche Heckteile entsprechend unterschiedlichen Einsatzzwecken vorgesehen sein können, welche wählbar an Teilmulden der beschriebenen Art verwendbar und in vorteilhafter Weiterbildung auch nachträglich auswechselbar sind, wofür vorteilhafterweise die Heckteile über vorzugsweise zerstörungsfrei lösbare Befestigungselemente an den Teilmulden befestigbar sind. Vorteilhafterweise können an den Heckteilen Befestigungsstrukturen und an den hinteren Kanten von Boden und Seitenwänden der Teilmulden korrespondierende Gegenstrukturen vorbereitet sein.

Die Verbindung der Muldenkomponenten im zweiten Fertigungsabschnitt über Kaltfügeverbindungen ermöglicht vorteilhafterweise die weitgehend oder im wesentlichen vollständige korrosionsschützende Beschichtung der Oberflächen der Kippmuldenanordnungen im ersten Fertigungsabschnitt ohne nach Schweißarbeiten in der Regel erforderliche Nacharbeiten im zweiten Fertigungsabschnitt.

Als erster Fertigungsabschnitt sei pauschal die Gesamtheit aller Fertigungsschritte vor dem Stapeltransport, als zweiter Fertigungsabschnitt die Gesamtheit aller Fertigungsschritte nach dem Stapeltransport bezeichnet.

Der Innenquerschnitt der Teilmulden in Ansicht in Längsrichtung ist vorteilhafterweise annähernd rechteckig mit einer im wesentlichen ebenen Oberfläche des Bodens, deren Erstreckung in Querrichtung um die Muldenmitte vorteilhafterweise wenigstens 40 %, insbesondere wenigstens 50 % der maximalen Innenweite der Teilmulde beträgt. Die gegen die Vertikale geneigten Seitenwände verlaufen vorteilhafterweise über wenigstens 60 % ihrer vertikalen Erstreckung gerade, worunter auch eine geringe Krümmung mit einem mittleren Krümmungsradius größer als die Breite der Teilmulde und eine Reliefstruktur durch Sicken oder dergleichen verstanden sei. Eine gebräuchliche, insbesondere zur Aussteifung der plattenförmigen Seitenwände dienende Reliefstruktur liegt vorteilhafterweise innerhalb eines Bereichs von maximal der 10-fachen, insbesondere maximal der 5-fachen Blechstärke der Seitenwände gegen den genannten geraden Verlauf. Der im wesentlichen geraden Bereichs der Seitenwände liegt vorteilhafterweise innerhalb eines Neigungswinkelbereichs von höchstens 10° gegen die Vertikale. Boden und Seitenwände gehen vorteilhafterweise jeweils in einem gerundeten Abschnitt ineinander über, welcher vorteilhafterweise in Querrichtung weniger als 20 % der Gesamtbreite, in vertikaler Richtung vorteilhafterweise weniger als 30 % der Gesamthöhe der Teilmulde einnimmt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Schrägansicht einer bevorzugten Ausführung einer Teilmulde,
- Fig. 2: eine Stapelanordnung von vier Teilmulden nach Fig. 1,
- Fig. 3: die Anordnung der Fig. 2 in Heckansicht,
- Fig. 4: eine schematische Heckansicht einer Teilmulde nach Fig. 1,
- Fig. 5: eine Transportsituation mit Anordnungen nach Fig. 2,
- Fig. 6: ein Heck einer Teilmulde und ein Heckteil,
- Fig. 7: eine Seitenansicht zu Fig. 6,
- Fig. 8: eine Teilmulde ohne Vorderwand,
- Fig. 9: eine Stapelanordnung mit Teilmulden nach Fig. 8,
- Fig. 10: eine Transportsituation mit Stapelanordnungen nach Fig. 9,
- Fig. 11: eine Teilmulde nach Fig. 8 mit einem Vorderwandmodul,
- Fig. 12: eine Variante eines Heckteils,
- Fig. 13: eine weitere Variante eines Heckteils.

In den Figuren sind teilweise Koordinaten eines rechtwinkligen x-y-z-Koordinatensystems mit eingezeichnet, wobei die x-Richtung die im wesentlichen horizontale Längsrichtung einer Kippmulde, die y-Richtung die dazu senkrecht verlaufende horizontale Querrichtung und z die Vertikalrichtung bezeichnet, wobei die Richtungsangaben jeweils auf die abgesenkte Position einer Kippmulde im regulären Fahrbetrieb bezogen sind.

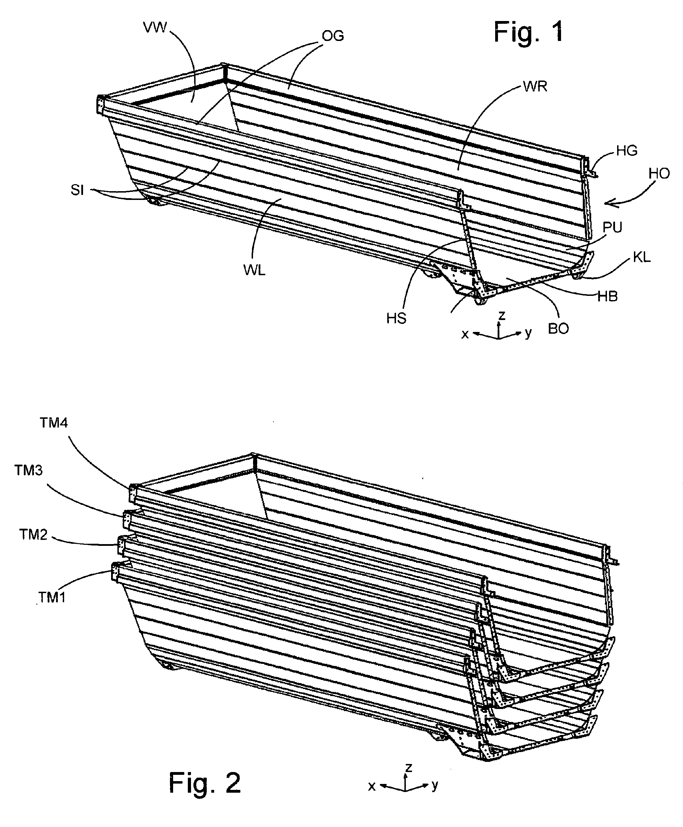

Fig. 1 zeigt eine Schrägansicht einer bevorzugten Ausführung einer Teilmulde nach der vorliegenden Erfindung, wobei die Blickrichtung von hinten links oben in das Muldenvolumen hinein gerichtet ist. Die Teilmulde TM enthält insbesondere einen Boden BO, eine linke Seitenwand WL, eine rechte Seitenwand WR und eine Vorderwand VW, welche das Muldenvolumen begrenzen. Die Teilmulde TM enthält kein für Fahrzeug-Kippmuldenanordnungen typisches Heckteil, so dass das Muldenvolumen entgegen der Längsrichtung x nach hinten eine im wesentlichen den gesamten Querschnitt ausmachende Öffnung HO aufweist. Ein Heckteil wird in einem späteren Fertigungsabschnitt im Bereich der hinteren Kanten von Boden und Seitenwänden an die Teilmulde angefügt.

An den Oberkanten der Seitenwänden WL, WR und der Vorderwand VW sind mit den plattenförmigen Wänden Obergurte OG verbunden, welche typischerweise als Profile ausgeführt und mit den Wänden WL, WR, VW durch Verschweißen und/ober über Kaltfügeverbindungen verbunden sind. Die Seitenwände WL, WR sind in ihrem überwiegenden Verlauf im wesentlichen eben und dabei gegen die Vertikale in der Art geneigt, dass sich die Teilmulde zwischen den Seitenwänden nach oben leicht aufweitet. Die Seitenwände können eine Reliefstruktur enthalten, welche im skizzierten Beispiel als in Längsrichtung verlaufende Sicken SI ausgeführt ist. Die Seitenwände WL und WR gehen vorzugsweise in an sich gebräuchlicher Art über gekrümmte Abschnitte PU in den Boden BO über. Der Boden bildet zwischen den gerundeten Übergängen PU eine im wesentlichen ebene Fläche. Der Boden BO ist typischerweise mit den Seitenwänden WL, WR durch Verschweißen oder über Kaltfügeverbindungen verbunden, wobei die Plattenränder aneinander stoßen oder auch überlappen können. Die gekrümmten Bereiche PU können dabei Teil des Bodens oder der Seitenwände oder auch zwischen diesen aufgeteilt sein. Boden BO und Seitenwände WL, WR bestehen vorzugsweise aus Blechzuschnitten, welche in den Übergangsbereichen PU gekrümmt verformt sind. Boden BO und Seitenwände WL, WR können auch aus einem einzigen Blechzuschnitt hergestellt sein.

Im Bereich der hinteren Kanten von Seitenwänden und Boden, worin nachfolgend wenn nicht explizit anders angegeben, auch die gekrümmten Übergangsbereiche PU mit verstanden sein sollen, sind Halteelemente vorgesehen, welche zur Befestigung eines Heckteils ausgebildet sind. Insbesondere sind in Verlängerung der Obergurte Haltelaschen HL, im Bereich der Seitenwände streifenförmige Halteelemente HS, im Bodenbereich weitere streifenförmige Halteelemente HB und bei den gekrümmten Übergangsbereichen PU Halteelemente in Form von Winkelstücken HU vorgesehen. Die Halteelemente sind jeweils fest mit Boden und Seitenwänden verbunden. In den hinteren unteren Eckbereichen der Teilmulde TM sind noch muldenseitige Teile KL eines Kipplagers dargestellt.

Der geneigte Verlauf der Seitenwände WL, WR mit sich nach oben aufweitendem Querschnitt der Teilmulde TM ermöglicht vorteilhafterweise eine Stapelung mehrerer Teilmulden TM der in Fig. 1 skizzierten Art in einer Stapelanordnung wie sie in Fig. 2 mit vier Teilmulden TM1, TM2, TM3 und TM4 der in Fig. 1 dargestellten Art skizziert ist. Durch die heckseitige, im wesentlichen den gesamten Querschnitt der Teilmulde ausmachende Öffnung HO können vorteilhafterweise die Teilmulden mit leichtem gegenseitigem Versatz in Längsrichtung übereinander angeordnet werden, wobei von jeweils zwei unmittelbar übereinander angeordneten Teilmulden die jeweils obere mit ihrem heckseitigen Ende entgegen der Längsrichtung x über das heckseitige Ende der jeweils unteren Teilmulde übersteht. Hierdurch kann zum einen an der Außenseite der Vorderwand VW eine zu deren Aussteifung und zur Aufnahme einer Hebezylinder-Anbindung dienende Struktur problemlos zwischen sich gegenüber stehenden Vorderwänden übereinander angeordneter Teilmulden untergebracht werden. Zum anderen sind dadurch an den hinteren Kanten von Boden und Seitenwänden angeordnete Halteelemente, welche von den Außenseiten der Bodenplatte bzw. Wandplatte bezüglich des Muldenvolumens nach außen abstehen, jeweils von den Endkanten der darunter liegenden Mulde nach hinten versetzt, so dass auch bei Querschnittsüberdeckung im der Halteelemente der oberen von zwei Teilmulden mit Seitenwänden der unteren Teilmulde keine Behinderung auftritt.

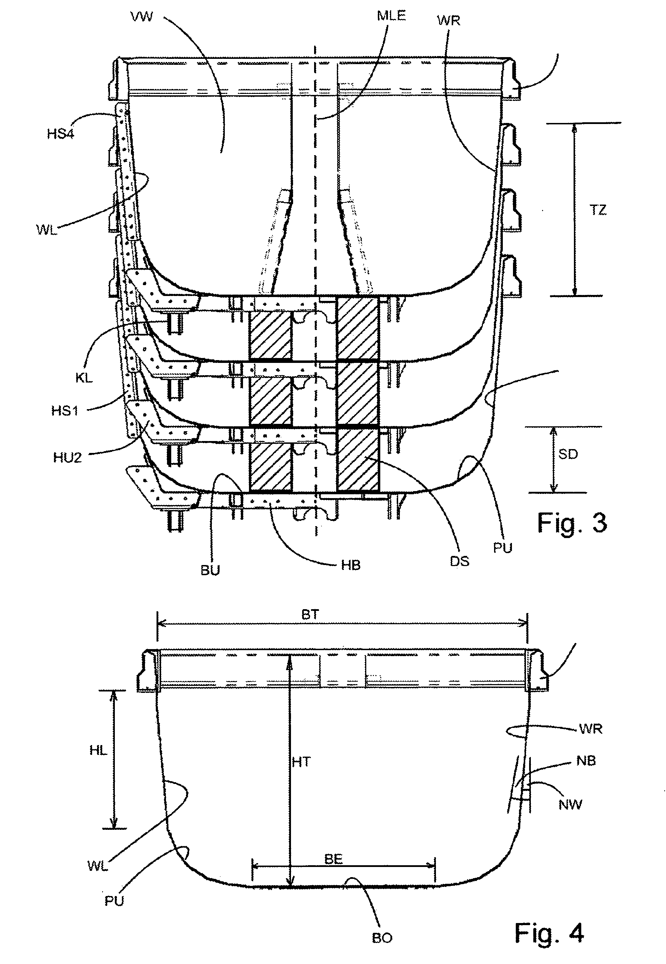

Fig. 3 zeigt die gestapelte Anordnung nach Fig. 2 mit Blickrichtung von hinten, wobei die linke Hälfte von Fig. 3 eine Draufsicht auf die heckseitigen Enden der Teilmulden darstellt und die rechte Hälfte von Fig. 3 einen Schnitt in einer gegen die heckseitigen Enden nach vorne versetzten y-z-Schnittebene darstellt.

Die innerhalb des Stapels aufeinander folgenden Teilmulden sind jeweils vertikal um ein Stapelmaß SD verschoben angeordnet. Das Stapelmaß SD ist vorzugsweise größer als die Höhe der Obergurte OG und der Kipplageranbauten KL, so dass diese nicht an der vertikal darunter liegenden Teilmulde anstoßen. Die Teilmulden sind durch zwischengefügte Distanzstücke DS, beispielsweise Kanthölzer gegeneinander abgestützt. Aus der linken Hälfte der Fig. 3 ist ersichtlich, dass die Halteelemente, insbesondere die Halteelemente im Bereich der gekrümmten Übergangsbereiche PU, beispielsweise die Halteelemente HU2, sich in der Ansicht nach Fig. 3 links mit der Seitenwand der darunter angeordneten Teilmulde TM1 überdecken. Die streifenförmigen Halteelemente HS entlang der Seitenwände überdecken sich in der Ansicht nach Fig. 3 links mit den Seitenwänden und Obergurten der jeweils darunter angeordneten Teilmulde. Explizit eingetragen ist das streifenförmige Halteelement HS4 der obersten Teilmulde TM4. Durch den gegenseitigen Versatz der Teilmulden in Längsrichtung ist dennoch keine Behinderung gegeben.

Aus der geschnittenen Ansicht in der rechten Hälfte der Fig. 3 ist erkennbar, dass sich die Seitenwände übereinander angeordneter Teilmulden nicht berühren und die Obergurte übereinander angeordneter Teilmulden vertikal voneinander beabstandet sind. Zwischen einander mit geringem Abstand gegenüberstehende Seitenwände können Zwischenlagen aus einem weicheren Material eingefügt sein.

Das Maß TZ gibt an, wie weit die lichten Innenquerschnitte übereinander angeordneter Mulden ineinander eintauchen, beispielsweise wie weit die obere Seite des Bodens der zweiten Teilmulde TM2 unterhalb der durch die Obergurte gebildeten Oberkante der ersten Teilmulde TM1 liegt. Dieses Maß TZ beträgt -vorteilhafterweise wenigstens 60 %, insbesondere wenigstens 75 % der gesamten Höhe des Innenraums der Teilmulden zwischen dem Boden und der Ebene der Oberkanten der Obergurte einer Teilmulde, welches in Fig. 4 mit HT bezeichnet ist.

In Fig. 4 ist entsprechend der Heckansicht nach Fig. 3 eine einzelne Teilmulde dargestellt, zu welcher verschiedene Abmessungen eingetragen sind.

Die gesamte Breite der Mulde, welche insbesondere durch die in Querrichtung außen liegenden Flächen der Obergurte OG bestimmt ist, ist mit BT bezeichnet. Der im wesentlichen ebene mittlere Bereich des Bodens BO zwischen den gekrümmt verlaufenden Abschnitten PU weist eine Breite BE in y-Richtung auf. Die Breite BE des im wesentlichen ebenen Bodenbereichs beträgt vorteilhafterweise wenigstens 40 %, vorzugsweise wenigstens 50 % der maximalen Innenweite BT der Teilmulde. Die damit trotz der Stapelbarkeit gegebene annähernd rechteckige Querschnittsform führt zu einem hohen Ladevolumen und einem niedrigen Schwerpunkt, insbesondere der beladenen Kippmuldenanordnung. Der im wesentlichen gerade, nach außen geneigt verlaufende Abschnitt der Seitenwände erstreckt sich über eine Höhe HL, welche vorteilhafterweise wenigstens 60 %, insbesondere wenigstens 75 % der Höhe HT des Innenraums der Teilmulde beträgt. Der im wesentlichen gerade Verlauf, worunter auch eine schwache Krümmung und/oder eine Reliefstruktur als eingeschlossen verstanden sein soll, der Seitenwände über den Höhenbereich HL liegt vorteilhafterweise innerhalb eines Bereichs NB von höchstens 10° eines Neigungswinkels NW vom Ansatz der Seitenwände an den Obergurten. Der Neigungswinkel beträgt im skizzierten bevorzugten Beispiel ca. 5°. Hierdurch wird die Verminderung des Nutzvolumens durch den geneigten Verlauf der Seitenwände gegenüber einem vertikalen Verlauf gering gehalten und zugleich die Stapelbarkeit ohne Berührung der Seitenwände gewährleistet.

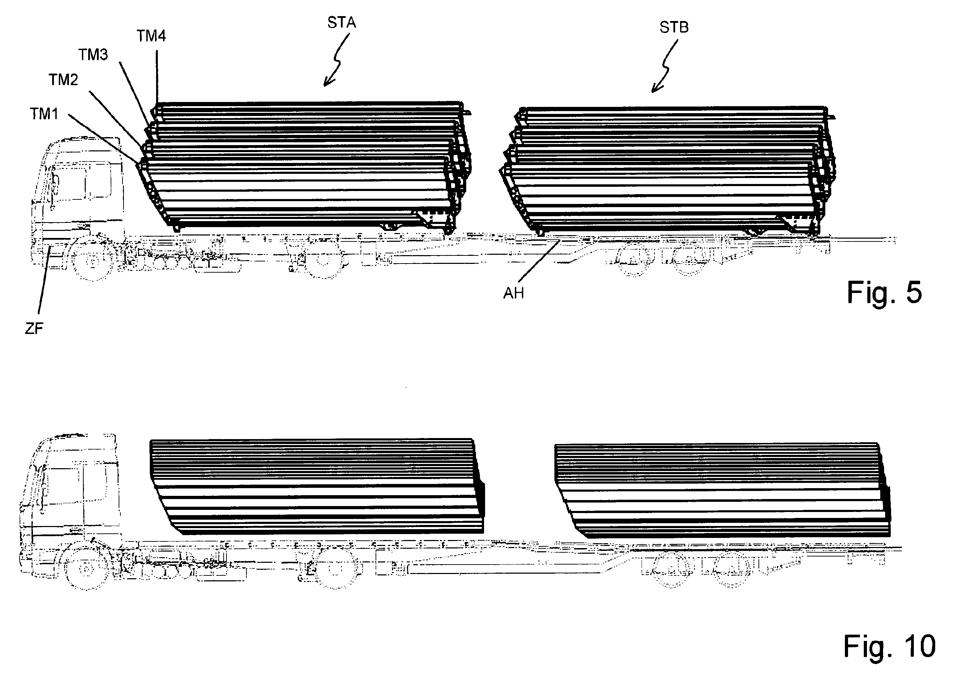

Fig. 5 zeigt schematisch eine Transportposition von jeweils zwei Stapelanordnungen von Mulden wie in Fig. 2 skizziert. Auf einem Zugfahrzeug ist eine erste Stapelanordnung STA mit Teilmulden TM1, TM2, TM3, TM4 angeordnet, welche in der zu Fig. 2 erläuterten Weise ineinander gestapelt sind. An das Zugfahrzeug ZF ist ein Anhänger AH angehängt, welcher eine weitere Stapelanordnung STB trägt. Die Kombination von Zugfahrzeug ZF und Anhänger AH mit jeweils einer Stapelanordnung von Teilmulden kann innerhalb gegebener Längenbeschränkungen von Zugfahrzeug-Anhänger-Kombinationen transportiert werden, so dass im skizzierten Beispiel mit nur einem Transportvorgang acht Teilmulden von einem ersten Fertigungsort an einen entfernten zweiten Fertigungsort transportiert werden können. Die transportieren Teilmulden können dabei vorteilhafterweise an einem ersten Fertigungsort weitgehend oder vollständig mit einer korrosionsschützenden Oberflächenbeschichtung versehen sein.

Weitere Komponenten der Fahrzeug-Kippmuldenanordnungen, wie beispielsweise Rahmenteile, Hebezylinder, Heckteile oder diverse Anbauteile können teilweise bei demselben Transportvorgang innerhalb der jeweils obersten Mulden der Stapelanordnungen oder in separaten Transporten transportiert werden, wobei solche weiteren Komponenten beim Transport kompakt zusammengefaßt werden können. Solche weiteren Komponenten, insbesondere Heckteile können vorteilhafterweise auch aus anderer Quelle zu dem zweiten, entfernten Fertigungsort gelangen.

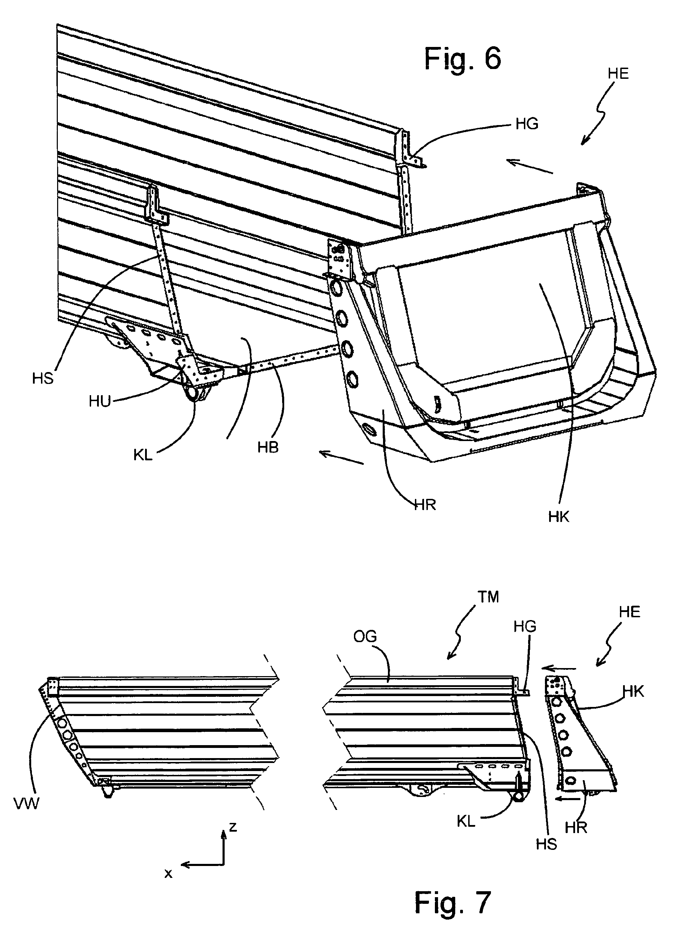

Fig. 6 zeigt als Teilschritt eines zweiten Fertigungsabschnitts das Anfügen eines Heckteiles HE an ein Heck einer Teilmulde TM, wobei die Halteelemente HS, HB, HU entlang der Hinterkanten von Boden und Seitenwänden und weiter Halteelemente HG in Verlängerung der Obergurte OG zur korrekten Ausrichtung des Heckteils HE bezüglich der Teilmulde TM und zur Befestigung des Heckteils HE an dem hinteren Ende der Teilmulde TM ausgebildet sind. Eine Befestigung des Heckteils HE an der Teilmulde TM erfolgt vorteilhafterweise ausschließlich durch Kaltfügeverbindungen, so dass eine bereits an einem ersten Fertigungsort erfolgte korrosionsschützende Beschichtung der Oberfläche der Teilmulde TM nicht gestört und insbesondere keine Verschweißung notwendig wird. Vorteilhafterweise können an dem Heckteil HE Befestigungsstrukturen und an der Teilmulde TM korrespondierende Gegenstrukturen, insbesondere an den Halteelementen, vorbereitet sein. Insbesondere kann eine Verbindung des Heckteils HE mit der Teilmulde TM auch über zerstörungsfrei lösbare Befestigungselemente, beispielsweise durch Verschraubung, erfolgen.

In Fig. 7 ist eine Teilmulde TM mit anzufügendem Heckteil HAT in Seitenansicht dargestellt. In Fig. 6 und Fig. 7 deuten eingezeichnete Pfeilen das Anfügen eines Heckteils HE an das hintere Ende einer Teilmulde TM an.

Das Heckteil HE enthält insbesondere einen formstabilen Rahmen HR, welcher eine um eine obere horizontale Schwenkachse schwenkbare Heckklappe HK umgibt.

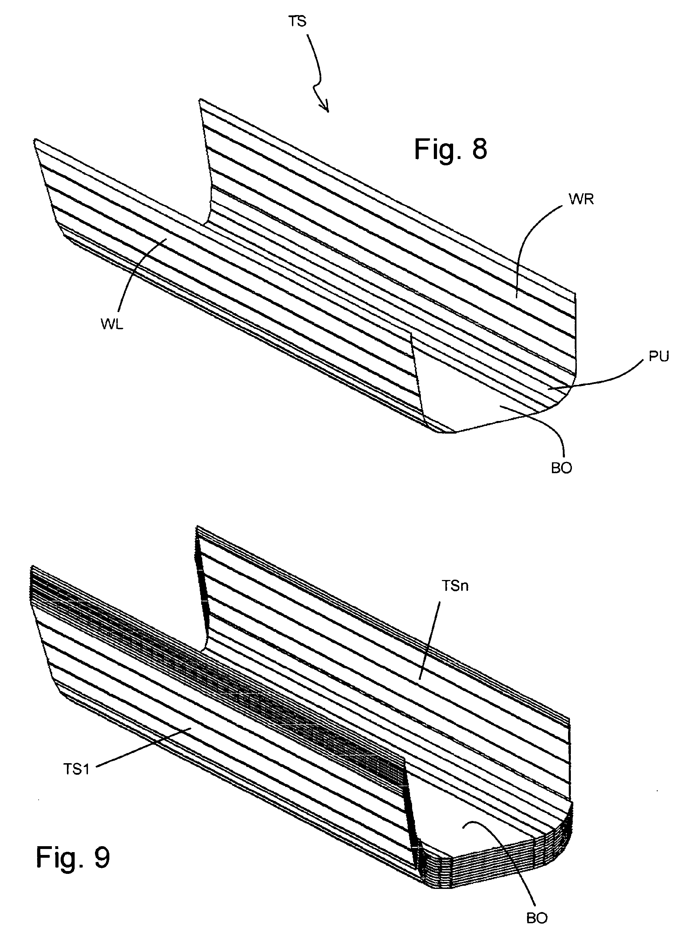

Fig. 8 zeigt eine Teilmulde TS gemäß einer weiteren Ausführungsform der Erfindung. Die Teilmulde TS besteht lediglich aus Boden BO und Seitenwänden WL, WR, welche wiederum über gekrümmte Übergangsbereiche PU ineinander übergehen. Die Teilmulde TS kann insbesondere aus einem einteiligen Blechzuschnitt geformt sein. Die einfache Ausführung der Teilmulde TS ermöglicht, dass diese in einer Variante eines Herstellungsverfahrens bereits beim Blechhersteller zugeschnitten, geformt, eventuell auch mit einer korrosionsschützenden Oberflächenbeschichtung versehen und als Stapelanordnung wie in Fig. 9 mit n Teilmulden TS1 bis TSn nach Fig. 8, z.B. n=12 dargestellt angeliefert werden. Die Stapelanordnung nach Fig. 9 kann dabei auch unmittelbar für den Transport zwischen dem ersten Fertigungsabschnitt und dem zweiten Fertigungsabschnitt verwandt werden. In der Stapelanordnung kann auch eine geringfügige elastische Verformung insbesondere der Seitenwände auftreten. Nach der Vereinzelung der Teilmulden nach dem Transport nehmen die Teilmulden wieder ihre vorherige Form ein. Fig. 10 zeigt einen Transport zweier Stapelanordnungen der in Fig. 9 skizzierten Art auf einer Fahrzeuganordnung mit Zugfahrzeug und Anhänger analog zu dem Beispiel nach Fig. 5.

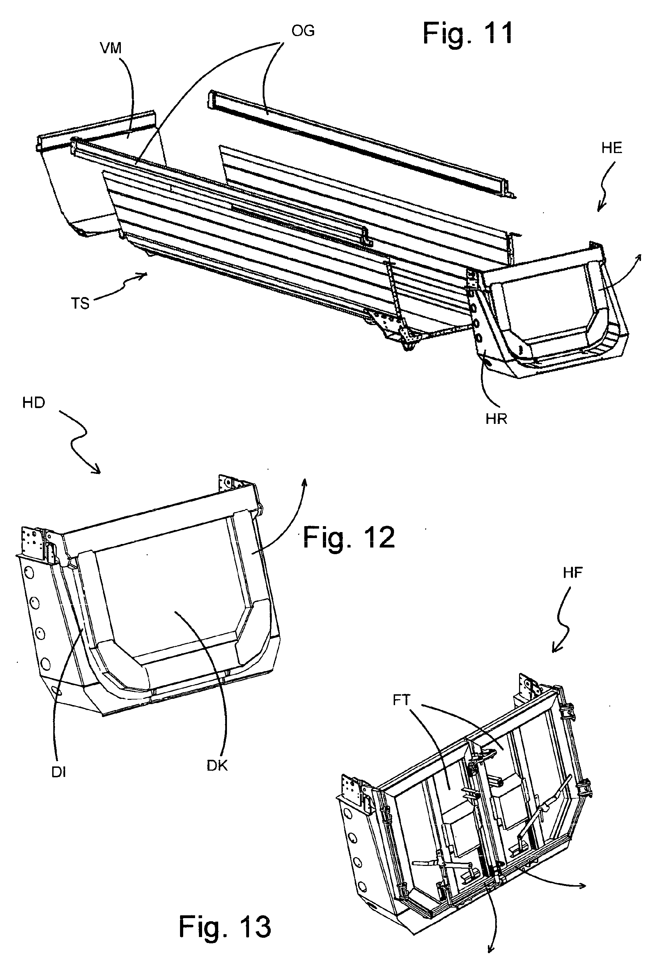

Aufgrund des gegenüber dem vorangegangenen Beispiel geringeren Vorfertigungsgrad der Teilmulden TS nach Fig. 8 sind im zweiten Verfahrensabschnitt am Zielort des Stapeltransports mehr Verfahrensschritte auszuführen. Insbesondere sind die Teilmulden TS wie in Fig. 11 schematisch angedeutet mit einem Vorderwandmodul VM, Obergurten OG und einem Heckteil HE sowie weiteren Anbauteilen (bereits verbunden gezeichnet), insbesondere am Boden der Teilmulde zu verbinden. Die Verbindung der skizzierten Komponenten und eventuell weiterer Komponenten, insbesondere kleinere Anbauteile, erfolgt vorteilhafterweise ausschließlich über Kaltfügeverbindungen.

In den Figuren nicht dargestellt ist die weitere Verarbeitung im zweiten Fertigungsabschnitt mit Anordnung der durch das Heckteil ergänzten Kippmulden auf einem Rahmen, welcher beispielsweise in an sich gebräuchlicher Art ein Rahmen eines Anhängerchassis oder ein Hilfsrahmen zur Anordnung einer Kippmulde auf einem Motorfahrzeug sein kann. Die diesbezüglichen Schritte sind prinzipiell bekannt. Vorteilhafterweise kann auch ein Fahrzeugrahmen in zerlegter Form zu dem zweiten Fertigungsort transportiert und dort, wiederum vorzugsweise über Kaltfügeverbindungen, zusammengefügt werden.

Die Vorfertigung von Teilmulden in einem ersten Verfahrensabschnitt und das Anfügen eines Heckteils an eine solche vorgefertigte Teilmulde in einem zweiten Fertigungsabschnitt begünstigt vorteilhafterweise auch ein System von Fahrzeug-Kippmuldenanordnungen mit unterschiedlichen Ausführungen von Kippmuldenanordnungen im einzelnen, wobei insbesondere vorgesehen sein kann, dass gleichartige Teilmulden durch unterschiedliche Heckteile ergänzt werden können und die Heckteile über jeweils gleiche Schnittstellen, welche insbesondere durch die bereits genannten Befestigungsstrukturen auf Seiten der Heckteile und Gegenstrukturen auf Seiten der Teilmulden gegeben sein können, je nach Einsatzfall wählbar sind. Hierdurch ist es insbesondere möglich, Teilmulden in hoher Stückzahl an einem ersten Fertigungsort kostengünstig in einheitlicher Bauweise herzustellen und eine Anpassung an unterschiedliche Einsatzfälle durch Auswahl des jeweils angemessenen Heckteils erst an dem zweiten Fertigungsort vorzunehmen. Die Heckteile können dabei, insbesondere bei kleinen Stückzahlen spezieller Ausführungen, auch aus anderer, von dem ersten Fertigungsort verschiedener Quelle kommen. Bei Befestigung der Heckteile über zerstörungsfrei lösbare Verbindungen mit den Teilmulden können Heckteile auch für einen Wechsel der Einsatzaufgabe einer Kippmuldenanordnung nachträglich gewechselt werden.

Während im Beispiel nach Fig. 11 ein Heckteil mit einem nach hinten verlängerten Schüttbereich dargestellt ist, zeigt Fig. 12 eine Variante eines Heckteils HD, bei welchem eine hochschwenkbare Heckklappe DK unter Zwischenfügen einer elastischen Dichtung DI an der Außenseite des Rahmens RD aufliegt. Fig. 13 zeigt als eine weitere Variante ein Heckteil HF, dessen Entladeöffnung durch zwei um im wesentlichen vertikale Achsen schwenkbare Flügeltüren FT verschlossen ist. In nicht dargestellten Varianten kann ein Heckteil, insbesondere für den Transport von rieselfähigem kleinkörnigem Transportgut, auch eine in einem Rahmen des Heckteils linear nach oben verschiebbare Rückwand aufweisen oder, insbesondere für fließfähiges Transportgut, in einer Rückwand einen verschließbaren Anschluss für eine Flüssigkeitsleitung aufweisen. Je nach Art des Transportguts und der Art der Entladung können auch andere Varianten von Vorteil sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt.

## Patentansprüche

1. Verfahren zur Herstellung von Fahrzeug-Kippmuldenanordnungen, bei welchen die Muldenkörper einen Boden, zwei Seitenwände und eine Vorderwand enthalten und durch ein Heckteil abgeschlossen sind, wobei für die Fahrzeug-Kippmuldenanordnungen in einem ersten Fertigungsabschnitt Teilmulden vorgefertigt werden und die vorgefertigten Teilmulden gestapelt an einen entfernten Ort transportiert und an diesem entfernten Ort in einem zweiten Verfahrensschritt zu den Fahrzeug-Kippmuldenanordnungen verbunden werden, **dadurch gekennzeichnet, dass** in dem ersten Fertigungsabschnitt im Querschnitt U-förmige Teilmulden (TM, TS) mit Boden (BO) und geneigt verlaufenden Seitenwänden (WR, WL) ohne Heckteil (HE) vorgefertigt und mit zusammen fallenden Mittellängsebenen (MLE) ineinander gestapelt transportiert werden.

2. Verfahren nach Anspruch 1, **dadurch gekennzeichnet, dass** in dem ersten Fertigungsabschnitt die Teilmulden (TM) mit einer Vorderwand (VW) versehen werden.

3. Verfahren nach Anspruch 1 oder 2, **dadurch gekennzeichnet, dass** in dem ersten Fertigungsabschnitt Halteelemente (HS, HU, HB) im Bereich der hinteren Kanten von plattenförmigen Teilen von Boden und/oder Seitenwänden befestigt werden.

4. Verfahren nach Anspruch 3, **dadurch gekennzeichnet, dass** die Halteelemente an den Außenflächen der plattenförmigen Teile von Boden bzw. Seitenwänden befestigt werden.

5. Verfahren nach einem der Ansprüche 1 bis 4, **dadurch gekennzeichnet, dass** die Teilmulden in Längsrichtung in der Art gegeneinander versetzt gestapelt und transportiert werden, dass die jeweils nächsthöhere Teilmulde mit ihrem heckseitigen Ende über das heckseitige Ende der darunter befindlichen Teilmulde hinausragt.

6. Verfahren nach einem der Ansprüche 1 bis 5, **dadurch gekennzeichnet, dass** die Teilmulden mit einer vertikalen Überdeckung (TZ) vertikal unmittelbar benachbarten Teilmulden von wenigstens 60 %, insbesondere wenigstens 75 % der Höhe der Teilmulden gestapelt und transportiert werden.

7. Verfahren nach Anspruch 1, **dadurch gekennzeichnet, dass** die Teilmulden (TS) im ersten Fertigungsabschnitt ohne Vorderwand gefertigt werden.

8. Verfahren nach Anspruch 7, **dadurch gekennzeichnet, dass** die Teilmulden (TS) mit einer vertikalen Überdeckung vertikal unmittelbar benachbarter Teilmulden von wenigstens 80 % der Höhe der Teilmulden gestapelt werden.

9. Verfahren nach einem der Ansprüche 1 bis 8, **dadurch gekennzeichnet, dass** in dem zweiten Fertigungsabschnitt eine Befestigung des Heckteils (HE) an der Teilmulde über Kaltfügeverbindungen, vorzugsweise mittels lösbarer Befestigungselemente erfolgt.

## Claims

1. Method for producing vehicle dumper arrangements in which the dumper bodies comprise a bottom, two side walls and a front wall and are closed off by a rear part, wherein part-dumpers are prefabricated in a first fabrication section for the vehicle dumper arrangements and the prefabricated part-dumpers are transported while stacked onto a remote location and are connected at this remote location to form the vehicle dumper arrangements in a second method step, **characterized in that** part-dumpers (TM, TS) of U-shaped cross section with bottom (BO) and inclined side walls (WR, WL) are prefabricated without rear part (HE) in the first fabrication section and are transported while stacked inside one another with coinciding centre longitudinal planes (MLE).

2. Method according to Claim 1, **characterized in that** the part-dumpers (TM) are provided with a front wall (VW) in the first fabrication section.

3. Method according to Claim 1 or 2, **characterized in that** holding elements (HS, HU, HB) are fastened in the region of the rear edges of plate-shaped parts of the bottom and/or side walls in the first fabrication section.

4. Method according to Claim 3, **characterized in that** the holding elements are fastened to the outer faces of the plate-shaped parts of the bottom or side walls.

5. Method according to one of Claims 1 to 4, **characterized in that** the part-dumpers are stacked and transported with an offset with respect to one another in the longitudinal direction in such a way that the respectively next-higher part-dumper projects with its rear end beyond the rear end of the part-dumper situated underneath.

6. Method according to one of Claims 1 to 5, **characterized in that** the part-dumpers are stacked and transported with a vertical overlap (TZ) of vertically directly adjacent part-dumpers of at least 60%, in particular at least 75%, of the height of the part-dumpers.

7. Method according to Claim 1, **characterized in that** the part-dumpers (TS) are fabricated without a front wall in the first fabrication section.

8. Method according to Claim 7, **characterized in that** the part-dumpers (TS) are stacked with a vertical overlap of vertically directly adjacent part-dumpers of at least 80% of the height of the part-dumpers.

9. Method according to one of Claims 1 to 8, **characterized in that** the rear part (HE) is fastened to the part-dumper via cold-joining connections, preferably by means of releasable fastening elements, in the second fabrication section.

## Revendications

1. Procédé de fabrication d'ensembles de bennes basculantes pour véhicules, dans lesquelles les corps de bennes présentent un fond, deux parois latérales et une paroi avant et sont fermés par une partie arrière, des bennes partielles étant préfabriquées dans une première section de fabrication pour les ensembles de bennes basculantes pour véhicules et les bennes partielles préfabriquées étant transportées sous forme empilée jusqu'à un site éloigné et étant raccordées aux ensembles de bennes basculantes pour véhicules au niveau de ce site éloigné dans une deuxième étape de procédé, **caractérisé en ce que** dans la première section de fabrication, des bennes partielles (TM, TS) de section transversale en forme de U avec un fond (BO) et des parois latérales (WR, WL) s'étendant de manière inclinée sans partie arrière (HE) sont préfabriquées et sont transportées de manière empilée les unes dans les autres avec des plans longitudinaux médians (MLE) coïncidant.

2. Procédé selon la revendication 1, **caractérisé en ce que** dans la première section de fabrication, les bennes partielles (TM) sont munies d'une paroi avant (VW).

3. Procédé selon la revendication 1 ou 2, **caractérisé en ce que** dans la première section de fabrication, des éléments de retenue (HS, HU, HB) sont fixés dans la région des arêtes arrière de parties en forme de plaque du fond et/ou des parois latérales.

4. Procédé selon la revendication 3, **caractérisé en ce que** les éléments de retenue sont fixés sur les surfaces extérieures des parties en forme de plaque du fond ou des parois latérales.

5. Procédé selon l'une quelconque des revendications 1 à 4, **caractérisé en ce que** les bennes partielles sont empilées de manière décalée les unes par rapport aux autres dans la direction longitudinale et sont transportées de telle sorte que chaque benne partielle respective la plus haute fasse saillie avec son extrémité arrière au-delà de l'extrémité arrière de la benne partielle située en dessous d'elle.

6. Procédé selon l'une quelconque des revendications 1 à 5, **caractérisé en ce que** les bennes partielles sont empilées et transportées avec un recouvrement vertical (TZ) de bennes partielles immédiatement adjacentes verticalement d'au moins 60 %, en particulier d'au moins 75 % de la hauteur des bennes partielles.

7. Procédé selon la revendication 1, **caractérisé en ce que** les bennes partielles (TS) sont fabriquées dans la première section de fabrication sans paroi avant.

8. Procédé selon la revendication 7, **caractérisé en ce que** les bennes partielles (TS) sont empilées avec un recouvrement vertical de bennes partielles immédiatement adjacentes verticalement d'au moins 80 % de la hauteur des bennes partielles.

9. Procédé selon l'une quelconque des revendications 1 à 8, **caractérisé en ce que** dans la deuxième section de fabrication se produit une fixation de la partie arrière (HE) au niveau de la benne partielle par le biais de connexions par assemblage à froid, de préférence au moyen d'éléments de fixation détachables.
